# EUROPEAN PATENT APPLICATION

(11) **EP 4 814 846 A1**
(43) Date of publication of application: **30.09.2026**
(21) Application number: 25199832.4
(22) Date of filing: 03.09.2025
(51) Int. Cl.: G06Q 30/0241, G06Q 30/0242

(54) **INFORMATION PROCESSING SYSTEM AND INFORMATION PROCESSING PROGRAM**

(30) Priority: 25.03.2025 JP 2025050628
(71) Applicant: Fujifilm Business Innovation Corp., Tokyo 107-0052 (JP)
(72) Inventor: YOSHIDA, Soshi, Yokohama (JP); ASANO, Taishi, Tokyo (JP); KAMEDA, Shinsuke, Tokyo (JP); OGINO, Ken, Tokyo (JP)
(74) Representative: Meissner Bolte Partnerschaft mbB

(57) **Abstract**

An information processing system includes a processor configured to: acquire information concerning a product to be advertised; generate information concerning advertising effectiveness of each of plural advertisement copies predicted for plural personas by using a language model on the basis of the information concerning the product; and display the advertising effectiveness of each of the plural advertisement copies predicted for the plural personas.

## Description

### Background

### (i) Technical Field

The present disclosure relates to an information processing system and an information processing program.

### (ii) Related Art

Japanese Patent No. 7583214 discloses an advertisement creation assistance device including an advertisement target information acquisition unit that acquires information concerning an advertisement target, an instruction creation unit that creates an instruction for causing a language model to generate an advertisement on the basis of the information concerning the advertisement target, an instruction transmitting unit that transmits the instruction to the language model, a reply receiving unit that receives a reply including the advertisement based on the instruction from the language model, and an advertisement display unit that displays the advertisement.

### Summary

In the case of a web advertisement, a target to which the web advertisement is to be delivered may be set. Even in the case of advertisements such as TV commercials and street advertisements, a core target such as a target audience of a TV program or a target audience in a place where an advertisement is displayed may be set.

On the other hand, conventionally, even in a case where a target is properly set, how effective an advertisement is for the target is empirically determined.

Accordingly, it is an object of the present disclosure to provide an information processing system and an information processing program that make it possible to predict advertising effectiveness of each of plural advertisement copies for plural personas.

According to a first aspect of the present disclosure, there is provided an information processing system including a processor configured to: acquire information concerning a product to be advertised; generate information concerning advertising effectiveness of each of plural advertisement copies predicted for plural personas by using a language model on the basis of the information concerning the product; and display the advertising effectiveness of each of the plural advertisement copies predicted for the plural personas.

In the information processing system according to the first aspect, an information processing system according to a second aspect is configured such that the processor is configured to further acquire persona-related information, and the plural personas used for the prediction of the advertising effectiveness are based on the persona-related information.

In the information processing system according to the second aspect, an information processing system according to a third aspect is configured such that the persona-related information changes depending on an advertisement placement timing.

In the information processing system according to the first aspect, an information processing system according to a fourth aspect is configured such that the processor is configured to: further acquire an indicator of the advertising effectiveness to be predicted; and generate the information concerning the advertising effectiveness of each of the plural advertisement copies predicted for the plural personas by using the language model in accordance with the indicator of the advertising effectiveness to be predicted.

In the information processing system according to the first aspect, an information processing system according to a fifth aspect is configured such that the plural advertisement copies are generated by a learning model on the basis of the information concerning the product.

In the information processing system according to the first aspect, an information processing system according to a sixth aspect is configured such that the processor is configured to: display the plural generated advertisement copies; receive selection of at least one of the plural advertisement copies; and generate information concerning advertising effectiveness of each of the selected at least one advertisement copy predicted for the plural personas.

In the information processing system according to the first aspect, an information processing system according to a seventh aspect is configured such that the processor is configured to further display the plural advertisement copies in an order depending on the predicted advertising effectiveness.

In the information processing system according to the fifth aspect, an information processing system according to an eighth aspect is configured such that the processor is configured to further acquire a rule which an advertisement copy to be generated is required to satisfy, and the plural advertisement copies are generated by the learning model on the basis of the information concerning the product and the rule which the advertisement copy is required to satisfy.

In the information processing system according to the fifth aspect, an information processing system according to a ninth aspect is configured such that the processor is configured to further acquire information concerning an attribute of the advertisement, and the plural advertisement copies are generated by the learning model on the basis of the information concerning the product and the information concerning the attribute of the advertisement.

In the information processing system according to the ninth aspect, an information processing system according to a tenth aspect is configured such that the information concerning the attribute of the advertisement includes information concerning a purpose of the advertisement.

In the information processing system according to the ninth aspect, an information processing system according to an eleventh aspect is configured such that the information concerning the attribute of the advertisement includes information concerning an advertising medium.

In the information processing system according to the ninth aspect, an information processing system according to a twelfth aspect is configured such that the information concerning the attribute of the advertisement includes information concerning an advertisement placement timing.

According to a thirteenth aspect of the present disclosure, there is provided an information processing system including: a processor configured to: execute a learning model plural times by inputting information on a new product, persona-related information concerning plural new personas, and plural new advertisement copies to output information concerning advertising effectiveness of each of the plural new advertisement copies predicted for the plural new personas, the learning model being pre-trained to output information concerning advertising effectiveness of an advertisement copy predicted for a persona upon input of information concerning a product to be advertised, persona-related information, and the advertisement copy; and display the advertising effectiveness of each of the plural new advertisement copies predicted for the plural new personas.

According to a fourteenth aspect of the present disclosure, there is provided an information processing system including: a processor configured to: cause a learning model to output information concerning advertising effectiveness of each of plural new advertisement copies predicted for plural new personas by inputting information on a new product, persona-related information concerning the plural new personas, and the plural new advertisement copies, the learning model being pre-trained to output information concerning advertising effectiveness of each of plural advertisement copies predicted for plural personas upon input of information concerning a product to be advertised, persona-related information concerning the plural personas, and the plural advertisement copies; and display the advertising effectiveness of each of the plural new advertisement copies predicted for the plural new personas.

In the information processing system according to the thirteenth or fourteenth aspect, an information processing system according to a fifteenth aspect is configured such that the learning model is a model trained by associating advertisement placement information including a placed advertisement copy, information concerning a product advertised by using the advertisement copy, and persona-related information corresponding to a customer to whom the advertisement copy has been delivered, and advertising effectiveness based on action of the customer.

In the information processing system according to the fifteenth aspect, an information processing system according to a sixteenth aspect is configured such that the learning model is regularly updated to the model trained by associating the advertisement placement information and the advertising effectiveness based on the action of the customer.

In the information processing system according to the fifteenth aspect, an information processing system according to a seventeenth aspect is configured such that the learning model is updated to the model trained by associating the advertisement placement information and the advertising effectiveness based on the action of the customer every time the advertisement placement information is obtained in a predetermined amount.

According to an eighteenth aspect of the present disclosure, there is provided an information processing program causing a computer to execute a process including: acquiring information concerning a product to be advertised; generating information concerning advertising effectiveness of each of plural advertisement copies predicted for plural personas by using a language model on the basis of the information concerning the product; and displaying the advertising effectiveness of each of the plural advertisement copies predicted for the plural personas.

According to a nineteenth aspect of the present disclosure, there is provided an information processing program causing a computer to execute a process including: executing a learning model plural times by inputting information on a new product, persona-related information concerning plural new personas, and plural new advertisement copies to output information concerning advertising effectiveness of each of the plural new advertisement copies predicted for the plural new personas, the learning model being pre-trained to output information concerning advertising effectiveness of an advertisement copy predicted for a persona upon input of information concerning a product to be advertised, persona-related information, and the advertisement copy; and displaying the advertising effectiveness of each of the plural new advertisement copies predicted for the plural new personas.

According to a twentieth aspect of the present disclosure, there is provided an information processing program causing a computer to execute a process including: causing a learning model to output information concerning advertising effectiveness of each of plural new advertisement copies predicted for plural new personas by inputting information on a new product, persona-related information concerning the plural new personas, and the plural new advertisement copies, the learning model being pre-trained to output information concerning advertising effectiveness of each of plural advertisement copies predicted for plural personas upon input of information concerning a product to be advertised, persona-related information concerning the plural personas, and the plural advertisement copies; and displaying the advertising effectiveness of each of the plural new advertisement copies predicted for the plural new personas.

According to the first aspect of the present disclosure, advertising effectiveness of each of the plural advertisement copies can be predicted for the plural personas.

According to the second aspect of the present disclosure, advertising effectiveness of each of the plural advertisement copies can be predicted for the plural personas based on the acquired persona-related information.

According to the third aspect of the present disclosure, advertising effectiveness of each of the plural advertisement copies can be predicted for the plural personas based on the persona-related information that changes depending on the advertisement placement timing.

According to the fourth aspect of the present disclosure, advertising effectiveness of each of the plural advertisement copies can be predicted for the plural personas in consideration of the indicator of the advertising effectiveness to be predicted.

According to the fifth aspect of the present disclosure, advertising effectiveness of each of the plural advertisement copies generated by the learning model on the basis of the information concerning the product can be predicted.

According to the sixth aspect of the present disclosure, advertising effectiveness of each of the selected advertisement copies can be predicted.

According to the seventh aspect of the present disclosure, the plural advertisement copies can be displayed in an order depending on the predicted advertising effectiveness.

According to the eighth aspect of the present disclosure, the plural advertisement copies can be generated in consideration of the rule which an advertisement copy is required to satisfy.

According to the ninth aspect of the present disclosure, the plural advertisement copies can be generated in consideration of the attribute of the advertisement.

According to the tenth aspect of the present disclosure, the plural advertisement copies can be generated in consideration of the purpose of the advertisement.

According to the eleventh aspect of the present disclosure, the plural advertisement copies can be generated in consideration of the advertising medium.

According to the twelfth aspect of the present disclosure, the plural advertisement copies can be generated in consideration of the advertisement placement timing.

According to the thirteenth aspect of the present disclosure, advertising effectiveness of each of the plural advertisement copies can be predicted for the plural personas.

According to the fourteenth aspect of the present disclosure, advertising effectiveness of each of the plural advertisement copies can be predicted for the plural personas.

According to the fifteenth aspect of the present disclosure, advertising effectiveness of each of the plural advertisement copies can be predicted for the plural personas by using the model trained by associating advertisement placement information and advertising effectiveness.

According to the sixteenth aspect of the present disclosure, advertising effectiveness of each of the plural advertisement copies can be predicted for the plural personas with high accuracy as compared with a case where the learning model is not regularly updated.

According to the seventeenth aspect of the present disclosure, advertising effectiveness of each of the plural advertisement copies can be predicted for the plural personas with high accuracy as compared with a case where the learning model is not updated every time the advertisement placement information is obtained in a predetermined amount.

According to the eighteenth aspect of the present disclosure, advertising effectiveness of each of the plural advertisement copies can be predicted for the plural personas.

According to the nineteenth aspect of the present disclosure, advertising effectiveness of each of the plural advertisement copies can be predicted for the plural personas.

According to the twentieth aspect of the present disclosure, advertising effectiveness of each of the plural advertisement copies can be predicted for the plural personas.

### Brief Description of the Drawings

An exemplary embodiment of the present disclosure will be described in detail based on the following figures, wherein:
Fig. 1 illustrates an outline configuration of an information processing system according to the present exemplary embodiment;
Fig. 2 is a block diagram illustrating a configuration of a substantial part of an electric system of each of a server and a user terminal in the information processing system according to the present exemplary embodiment;
Fig. 3 is a functional block illustrating a functional configuration of the server in the information processing system according to the present exemplary embodiment;
Fig. 4 illustrates an example of a trained neural network model;
Fig. 5 is a flowchart illustrating an example of flow of estimation processing performed by the server of the information processing system according to the present exemplary embodiment;
Fig. 6 illustrates an example of a display screen displayed on the user terminal;
Fig. 7 illustrates an example of a display screen displayed on the user terminal;
Fig. 8 illustrates an example of a display screen displayed on the user terminal;
Fig. 9 is a flowchart illustrating an example of flow of estimation processing performed by the server of the information processing system according to the present exemplary embodiment;
Fig. 10 is a flowchart illustrating an example of flow of estimation processing performed by the server of the information processing system according to the present exemplary embodiment;
Fig. 11 illustrates an example of a display screen displayed on the user terminal; and
Fig. 12 illustrates an example of a display screen displayed on the user terminal.

### Detailed Description

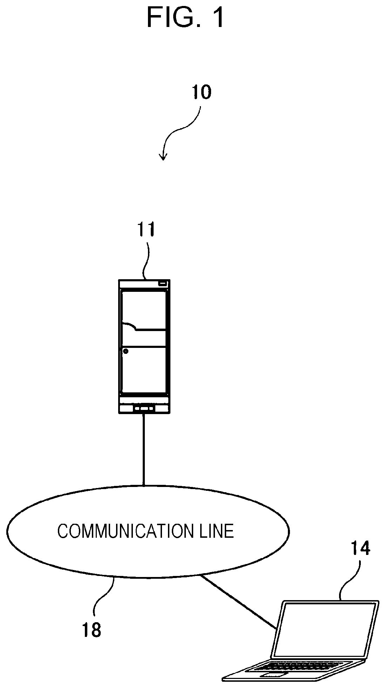

An example of the present exemplary embodiment is described in detail below with reference to the drawings. In the present exemplary embodiment, an information processing system in which a user terminal, a server, and the like are connected over a communication line such as a wide variety of networks is described as an example. Fig. 1 illustrates an outline configuration of an information processing system 10 according to the present exemplary embodiment.

As illustrated in Fig. 1, the information processing system 10 according to the present exemplary embodiment includes a server 11, a user terminal 14, and the like. The server 11 and the user terminal 14 are connected over a communication line 18 such as a local area network (LAN), a wide area network (WAN), the Internet, or an intranet. The server 11 and the user terminal 14 are capable of transmitting and receiving various kinds of data to and from each other over the communication line 18.

Note that although one server 11 and one user terminal 14 are illustrated in Fig. 1, the number of servers 11 and/or the number of user terminals 14 may be more than one.

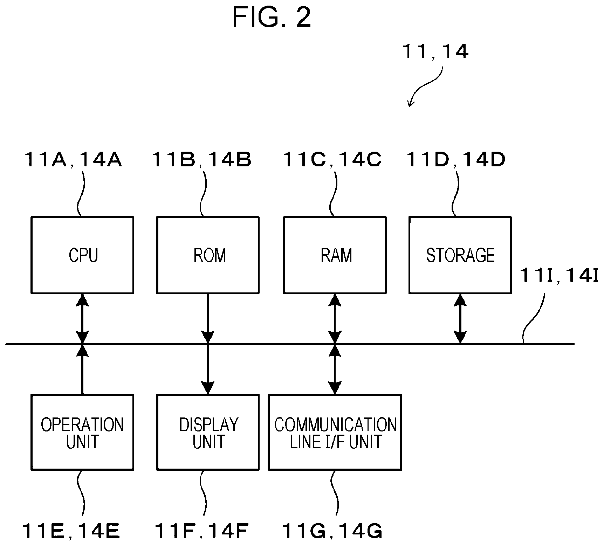

Next, a configuration of a substantial part of an electric system of each of the server 11 and the user terminal 14 according to the present exemplary embodiment is described. Fig. 2 is a block diagram illustrating a configuration of a substantial part of an electric system of each of the server 11 and the user terminal 14 in the information processing system 10 according to the present exemplary embodiment. Since the server 11 and the user terminal 14 have a typical computer configuration, the server 11 is described below as a representative.

As illustrated in Fig. 2, the server 11 according to the present exemplary embodiment includes a central processing unit (CPU) 11A as an example of a processor, a read only memory (ROM) 11B, a random access memory (RAM) 11C, a storage 11D, an operation unit 11E, a display unit 11F, and a communication line interface (I/F) unit 11G. The CPU 11A controls operation of the whole server 11. The ROM 11B stores therein in advance various control programs, various parameters, and the like. The RAM 11C is used as a work area or the like while the CPU 11A executes various programs. The storage 11D stores therein various kinds of data, application programs, and the like. The operation unit 11E is used to input various kinds of information. The display unit 11F is used to display various kinds of information. The communication line I/F unit 11G is connected to the communication line 18, and transmits and receives various kinds of data to and from another apparatus that is connected to the communication line 18. The communication line I/F unit 11G may be configured to be directly communicable with each apparatus by using various kinds of known wireless communication. The units of the server 11 are electrically connected to one another by a system bus 11I. Note that although the storage 11D is applied as a storage unit in the server 11 according to the present exemplary embodiment, a nonvolatile storage unit such as a hard disk drive (HDD) or a flash memory is applied as an example of a storage.

According to the above configuration, the server 11 according to the present exemplary embodiment executes access to the ROM 11B, the RAM 11C, and the storage 11D, acquisition of various kinds of data via the operation unit 11E, and display of various kinds of information on the display unit 11F by using the CPU 11A. Furthermore, the server 11 executes control of transmission and reception of communication data via the communication line I/F unit 11G by the CPU 11A.

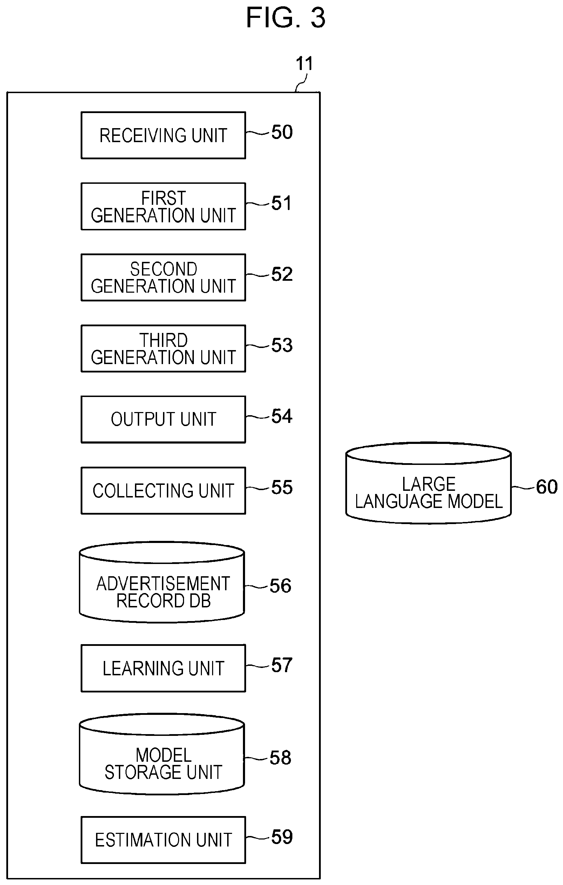

Next, a functional configuration of the server 11 is described. Fig. 3 is a block diagram illustrating an example of the functional configuration of the server 11.

As illustrated in Fig. 3, the server 11 includes, as functional units, a receiving unit 50, a first generation unit 51, a second generation unit 52, a third generation unit 53, an output unit 54, a collecting unit 55, an advertisement record database (DB) 56, a learning unit 57, a model storage unit 58, and an estimation unit 59.

The receiving unit 50 receives information concerning a product to be advertised. The information concerning the product includes, specifically, information listed on a product website and a catalog such as a product name (a proper name, a brand name), a generic name (product category), product features (components, performance, specifications), and application examples. The information concerning the product may further include a company name, a brand image, an image, and the like.

For example, the receiving unit 50 receives a product name "green flesh salad dressing", product features "concentrated flavor of domestically grown vegetables, low in calories, additive-free", and a brand image "healthy and flesh, natural" input from the user terminal 14.

The receiving unit 50 receives information concerning customers. The information concerning the customers includes, specifically, attributes (e.g., age, gender, place of residence) of the customers.

For example, the receiving unit 50 receives ages "20s, 30s" and genders "female, male" of the customers input from the user terminal 14.

The receiving unit 50 receives information concerning attributes of the advertisement. The information concerning the attributes of the advertisement includes, specifically, information concerning type and scale of an advertising medium and a purpose of the advertisement.

The information concerning the purpose of the advertisement include, for example, desired effects such as increase in awareness, enhancement of public image, and increase in sales, an apology advertisement, improvement in repeat rate of existing customers, and acquisition of new customers.

For example, the receiving unit 50 receives information concerning the purpose of the advertisement "increase in purchase motivation among health-conscious users" input from the user terminal 14.

The receiving unit 50 receives designation of an indicator of advertising effectiveness to be predicted.

The indicator of advertising effectiveness to be predicted is, specifically, a key performance indicator (KPI) such as a click through rate. More specifically, in the case of a web advertisement, the indicator of advertising effectiveness to be predicted is an impression (Imp), cost per mille (CPM), the number of clicks (Click), cost per click (CPC), click through rate (CTR), the number of conversions (CV), cost per action (CPA), a conversion rate (CVR), or the like. In a case where the advertising medium is a non-web medium, the indicator of the advertising effectiveness to be predicted is the number of shares on Social Networking Service (SNS), an audience rating, a viewing time, or the like. For example, the receiving unit 50 receives designation of the indicator of advertising effectiveness to be predicted "purchase motivation and click through rate" input from the user terminal 14.

The receiving unit 50 receives a rule which an advertisement copy to be generated is required to satisfy. Examples of the rule which an advertisement copy to be generated is required to satisfy include reflecting a corporate image, using an English word, avoid resemblance to an advertisement copy of another company, excluding prohibited words, and limit on the number of characters. The advertisement copy is a text used for advertising and includes a sales copy and a selling point of a product.

For example, the receiving unit 50 receives a rule which an advertisement copy to be generated is required to satisfy "excluding prohibited words "stinging", "itchy" and "cheap"" input from the user terminal 14. The receiving unit 50 receives information concerning a timing of advertisement placement. Specifically, the information concerning a timing of advertisement placement includes date and time, a period, a season, an event, and the like of advertisement placement. For example, in a case where the product to be advertised is a jewelry item, it may be predicted that advertising effectiveness for males as a present before Christmas is higher than that during other periods.

The first generation unit 51 generates persona-related information concerning plural personas by using a large language model 60 on the basis of the received information concerning customers and information concerning attributes of the advertisement. In a case where the information concerning a timing of advertisement placement is designated by the information concerning attributes of the advertisement, persona-related information predicted to be high in advertising effectiveness is generated in accordance with the timing. Persona-related information corresponding to the designated timing of advertisement placement may be extracted by using a table in which a timing and persona-related information are associated. The persona is, specifically, a profile of a customer having plural attributes (e.g., age, gender, place of residence, occupation, job position, annual income, family structure, hobby, special skill, sense of value, lifestyle). The number of attributes may be one or may be more than one.

The persona-related information includes a specific persona, attributes themselves that constitute the persona, and a target. The target is attributes of a customer to whom the advertisement is to be delivered.

For example, the first generation unit 51 creates a prompt text that prompts generation of the persona-related information concerning plural personas on the basis of the received information concerning customers and information concerning attributes of the advertisement, and inputs the created prompt text to the large language model 60. The first generation unit 51 acquires the persona-related information concerning plural personas from output of the large language model 60.

For example, the first generation unit 51 acquires persona-related information concerning a persona A "A health-conscious woman in her 30s, living in an urban area, who wants to balance work and family.", persona-related information concerning a persona B "A man in his 20s who is enthusiastic about fitness and goes to a gym, and leads a health-conscious life.", and persona-related information concerning a persona C "A housewife in her 40s who is sensitive to food additives and gives highest importance to her child's health."

The large language model 60 is, for example, stored in a server different from the server 11. The large language model 60 is generative artificial intelligence (AI). Examples of the large language model include generative AIs such as ChatGPT (Registered Trademark) (Internet search <URL: https://openai.com/blog/chatgpt>) and Gemini (Registered Trademark) (Internet search <URL: https://gemini.google.com/?hl=ja>). The large language model 60 is obtained by performing deep learning on a neural network. To the large language model 60, a prompt text including an instruction is input, and inferential data such as text data indicative of a text and image data indicative of an image is input. The large language model 60 perform inference based on the input inferential data in accordance with the instruction indicated by the prompt text and outputs an inference result in a data format such as audio data and text data. The inference as used herein refers, for example, to analysis, classification, prediction, summarizing, and/or the like. Note that the language model according to the present disclosure is not limited to a large language model, and examples thereof include a large multimodal model (LMM) and a small language model (SLM).

The second generation unit 52 causes the large language model 60 to generate plural advertisement copies on the basis of the received information concerning the product, information concerning attributes of the advertisement, and rule which an advertisement copy to be generated is required to satisfy.

Specifically, the second generation unit 52 creates a prompt text that prompts generation of plural advertisement copies on the basis of the received information concerning the product, information concerning attributes of the advertisement, and rule which an advertisement copy to be generated is required to satisfy, and inputs the created prompt text to the large language model 60. The second generation unit 52 acquires the plural generated advertisement copies from output of the large language model 60.

For example, the second generation unit 52 creates the following prompt text.

"System prompts: analyze given product information and target data and suggests plural advertisement copies. Exclude any prohibited words when specified. User prompts:
[product information]
product name: "green flesh salad dressing"
features "concentrated flavor of domestically grown vegetables, low in calories, additive-free"
brand image "healthy and flesh, natural"
sales target: health-conscious users
selling price: 1,200 yen
[advertisement information]
campaign data: "spring fresh start campaign"
advertising purpose: increase in purchase motivation among health-conscious users advertising area: nationwide
advertising age group: 20s to 40s
placed advertisement copies:
   "Healthy beauty with lower calorie! Change your everyday salad"
   "Discover your new self from one bite of salad"
   "For your fresh start in spring! Take first healthy step with green fresh"
   placed image: vivid images of product package and salad
   advertising media: Internet advertisement, SNS advertisement
   advertising period: one month
   advertising budget: proper budget (no detailed budget information)
   advertising result: initial sales exceeded expectations, but sales momentum decreased thereafter
   [prohibited words] "terrible" "worst" "overvalued"
   [request content]
   1) suggest plural advertisement copies
   2) exclude prohibited words"

The third generation unit 53 causes the large language model 60 to generate information concerning advertising effectiveness of each of the plural generated advertisement copies predicted for the plural generated personas on the basis of the received information concerning the product, the generated persona-related information concerning the plural personas, the plural generated advertisement copies, and designation of an indicator of advertising effectiveness to be predicted. In this case, the third generation unit 53 causes the large language model 60 to generate information concerning advertising effectiveness of each of the advertisement copies predicted for the plural personas in accordance with designation of an indicator of advertising effectiveness to be predicted.

Specifically, the third generation unit 53 creates a prompt text that prompts prediction of advertising effectiveness of each of the plural generated advertisement copies for the plural generated personas on the basis of the received information concerning the product, the generated persona-related information concerning the plural personas, the plural generated advertisement copies, and designation of an indicator of advertising effectiveness to be predicted, and inputs the created prompt text to the large language model 60. The third generation unit 53 generates plural advertisement copies from output of the large language model 60, and acquires information concerning advertising effectiveness of each of the plural generated advertisement copies predicted for the plural generated personas.

For example, the third generation unit 53 creates the following prompt text.

"System prompts: Quantify, for each given advertisement copy, predicted effectiveness (e.g., purchase motivation, click rate) of the advertisement copy for different personas based on input product information and persona information.
User prompts:
[product information]
product name: "green flesh salad dressing"
features "concentrated flavor of domestically grown vegetables, low in calories, additive-free"
brand image "healthy and flesh, natural"
sales target: health-conscious users
selling price: 1,200 yen
[persona-related information]
persona A: A health-conscious woman in her 30s, living in an urban area, who wants to balance work and family.
persona B: A man in his 20s who is enthusiastic about fitness and goes to a gym, and leads a health-conscious life.
persona C: A housewife in her 40s who is sensitive to food additives and gives highest importance to her child's health.
[advertisement copies]
"delicious salad"
"tasty salad"
"super tasty salad"
[request content]

Output, for each persona, advertising effectiveness of each advertisement copy as a percentage and output an overall score on a 100-point scale.

For example, the following output is acquired: the first advertisement copy "delicious salad", predicted effectiveness "persona A 80%, persona B 60%, persona C 20%, overall score 70 points", the second advertisement copy "tasty salad", predicted effectiveness "persona A 30%, persona B 80%, persona C 70%, overall score 80 points", the third advertisement copy "super tasty salad", predicted effectiveness "persona A 10%, persona B 10%, persona C 90%, overall score 60 points".

The output unit 54 displays, on the user terminal 14, advertising effectiveness of each of the plural advertisement copies predicted for the plural personas. For example, advertising effectiveness of each of the plural advertisement copies predicted for the plural personas is displayed, as illustrated by the following Table 1. Although the advertising effectiveness is predicted as a percent in the example of the present exemplary embodiment, the advertising effectiveness may be predicted by using any of the indicators listed above as a specific example of an indicator of advertising effectiveness or another indicator. In this case, the plural advertisement copies may be displayed in an order depending on the predicted advertising effectiveness (e.g., overall score). In calculating the overall score, an average, a median, a maximum value, or another indicator of the advertising effectiveness predicted for the plural personas, predicted effectiveness including a non-displayed persona, predicted effectiveness without designation of a persona, the number of characters of an advertisement copy, or the like may be used.

**[Table 1]**

| | First advertisement copy | Second advertisement copy | Third advertisement copy |
|---|---|---|---|
| Persona A | 80% | 30% | 10% |
| Persona B | 60% | 80% | 10% |
| Persona C | 20% | 70% | 90% |
| Overall score | 70 points | 80 points | 30 points |

The collecting unit 55 collects, for each of actually placed advertisement copies, information concerning an advertised product, persona-related information, and advertising effectiveness of the advertisement copy.

Specifically, the collecting unit 55 collects, for each of advertisement copies placed for customers, advertisement placement information including information concerning an advertised product, persona-related information corresponding to the customers, and information concerning reaction of the customers (e.g., whether or not the advertisement copy was clicked). In this case, the collecting unit 55 analyzes the persona-related information corresponding to the customers and the information concerning reaction of the customers (e.g., whether or not the advertisement copy was clicked) that are collected for the customers, and thus acquires, for each persona, the persona-related information and advertising effectiveness of the advertisement copy.

Note that features derived from customer attributes (e.g., age, gender) included in customer information of the customer may be collected as the persona-related information.

The advertisement record database 56 stores therein, for each of actually placed advertisement copies, information concerning an advertised product, persona-related information, and advertising effectiveness of the advertisement copy collected by the collecting unit 55.

The learning unit 57 generates, as training data, a pair of input information including a placed advertisement copy, information concerning an advertised product, and persona-related information, which are obtained from the advertisement record database 56, and advertising effectiveness of the advertisement copy.

The learning unit 57 constructs a neural network model for estimating, upon input of input information, advertising effectiveness of an advertisement copy corresponding to the input information on the basis of plural pieces of training data. Note that the neural network model is an example of a learning model.

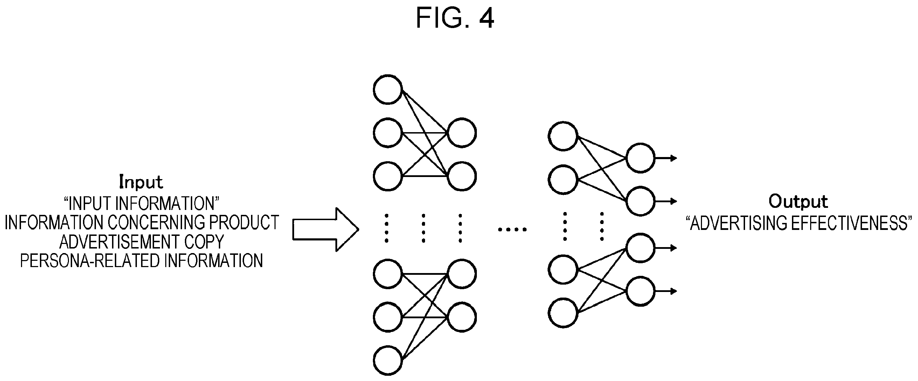

Specifically, the trained neural network model receives input of input information including at least one of a placed advertisement copy, information concerning an advertised product, and persona-related information and outputs advertising effectiveness of the advertisement copy corresponding to the input information (see Fig. 4). Deep learning may be used as an example of a learning algorithm, and the neural network model may be constructed to output advertising effectiveness of an advertisement copy of training data upon input of input information of the training data.

More specifically, input information of training data may be input, advertising effectiveness of an advertisement copy may be estimated as output of the model, the estimated advertising effectiveness of the advertisement copy and advertising effectiveness of the advertisement copy of the training data may be compared, an error of the advertising effectiveness of the advertisement copy may be calculated, and parameters of the model may be updated so that a value of the error is minimized.

The model storage unit 58 stores therein the trained neural network model.

In a case where the trained neural network model has been constructed by the learning unit 57, the estimation unit 59 predicts advertising effectiveness of each of the plural generated advertisement copies for the plural generated personas by using the trained neural network model instead of the third generation unit 53.

Specifically, the estimation unit 59 repeatedly predicts, for each of combinations of persona-related information concerning the plural generated personas and the plural generated advertisement copies, advertising effectiveness of the advertisement copy for the persona on the basis of the received information concerning the product, the persona-related information, and the advertisement copy by using the trained neural network model stored in the model storage unit 58.

More specifically, various kinds of information included in input information including the received information concerning the product, the persona-related information, and the advertisement copy are converted into a data structure (e.g., a scalar value, a vector) that can be input to the trained neural network model and are input to the trained neural network model, and advertising effectiveness of the advertisement copy for the persona is predicted from output of the trained model.

Next, operation of the information processing system 10 is described.

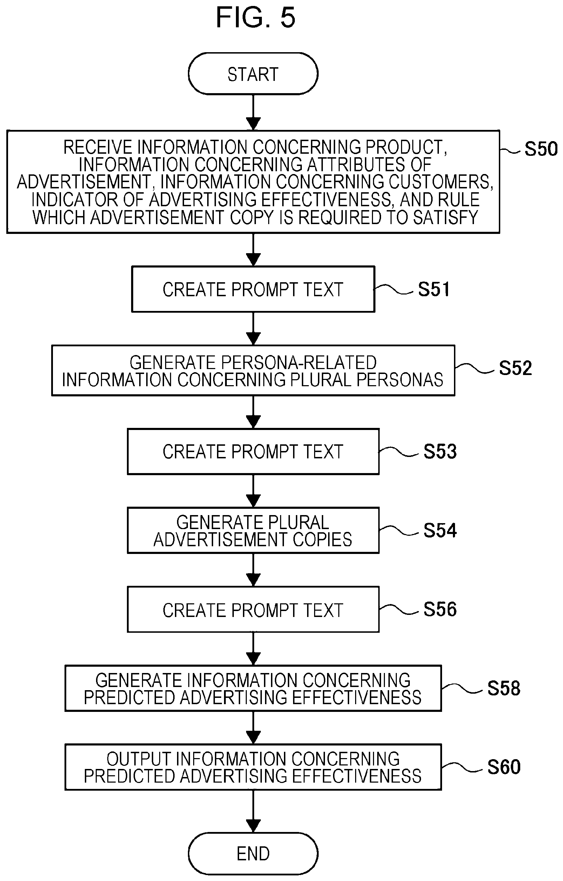

First, in a case where the trained neural network model has not been constructed by the learning unit 57, the CPU 11A reads out an estimation program from the ROM 14B or the storage 14D, loads the estimation program into the RAM 14C, and executes the estimation program, and thus estimation processing illustrated in Fig. 5 is performed in the server 11. It is assumed here that information concerning a product for which an advertisement is to be generated, information concerning customers, information concerning attributes of the advertisement, designation of an indicator of advertising effectiveness to be predicted, and a rule which an advertisement copy to be generated is required to satisfy have been input on the user terminal 14.

In step S50, the CPU 11A as the receiving unit 50 receives the information concerning the product for which an advertisement is to be generated that is input from the user terminal 14. Furthermore, the CPU 11A as the receiving unit 50 receives the information concerning the customers that is input from the user terminal 14. The CPU 11A as the receiving unit 50 receives the information concerning attributes of the advertisement to be generated that is input from the user terminal 14. The CPU 11A as the receiving unit 50 receives designation of the indicator of advertising effectiveness to be predicted that is input from the user terminal 14. The CPU 11A as the receiving unit 50 receives the rule which an advertisement copy to be generated is required to satisfy that is input from the user terminal 14.

In step S51, the CPU 11A as the first generation unit 51 creates a prompt text that prompts generation of persona-related information concerning plural personas on the basis of the received information concerning the customers and information concerning the attributes of the advertisement.

In step S52, the CPU 11A as the first generation unit 51 acquires persona-related information concerning the plural personas from output of the large language model 60 by inputting the created prompt text to the large language model 60.

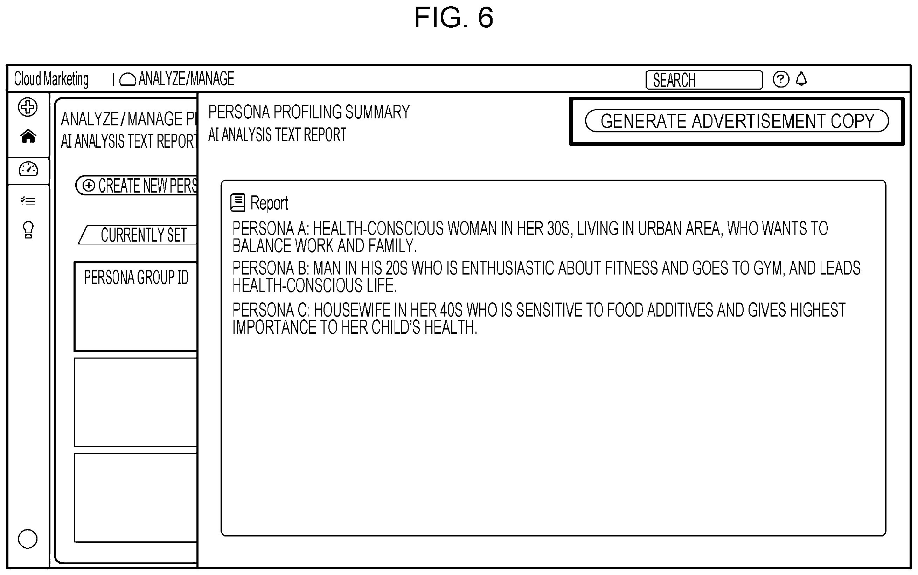

In this case, as illustrated in Fig. 6, the generated persona-related information concerning the plural personas may be displayed on the user terminal 14. Fig. 6 illustrates an example in which detailed information concerning the plural generated personas is displayed and a display screen including a button for giving an instruction to generate an advertisement copy is displayed on the user terminal 14.

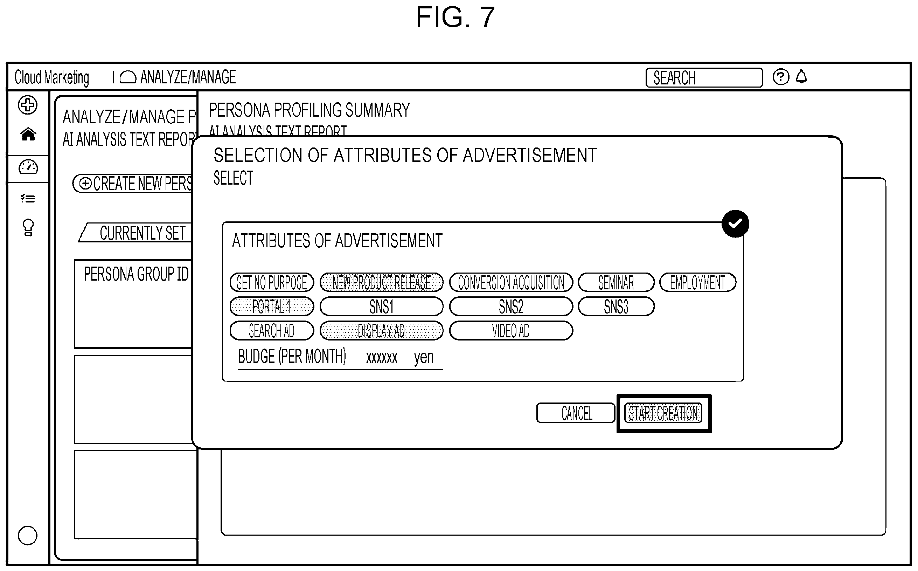

Furthermore, as illustrated in Fig. 7, a screen for receiving information concerning attributes of the advertisement again may be displayed on the user terminal 14. Fig. 7 illustrates an example in which a display screen including plural buttons for selecting plural pieces of information concerning attributes of the advertisement and an entry field for an advertisement budget is displayed on the user terminal 14.

In step S53, the CPU 11A as the second generation unit 52 creates a prompt text that prompts generation of plural advertisement copies on the basis of the received information concerning the product, information concerning attributes of the advertisement, and rule which an advertisement copy to be generated is required to satisfy.

In step S54, the CPU 11A as the second generation unit 52 acquires plural generated advertisement copies from output of the large language model 60 by inputting the created prompt text to the large language model 60.

In step S56, the CPU 11A as the third generation unit 53 creates a prompt text that prompts prediction of advertising effectiveness of each of the plural generated advertisement copies for the plural generated personas on the basis of the received information concerning the product, the generated persona-related information concerning the plural personas, the plural generated advertisement copies, and designation of an indicator of advertising effectiveness to be predicted.

In step S58, the CPU 11A as the third generation unit 53 acquires information concerning advertising effectiveness of the plural generated advertisement copies predicted for the plural generated personas from output of the large language model 60 by inputting the created prompt text to the large language model 60.

In step S60, the CPU 11A as the output unit 54 transmits the advertising effectiveness of each of the plural generated advertisement copies predicted for the plural generated personas to the user terminal 14, and then ends the estimation processing.

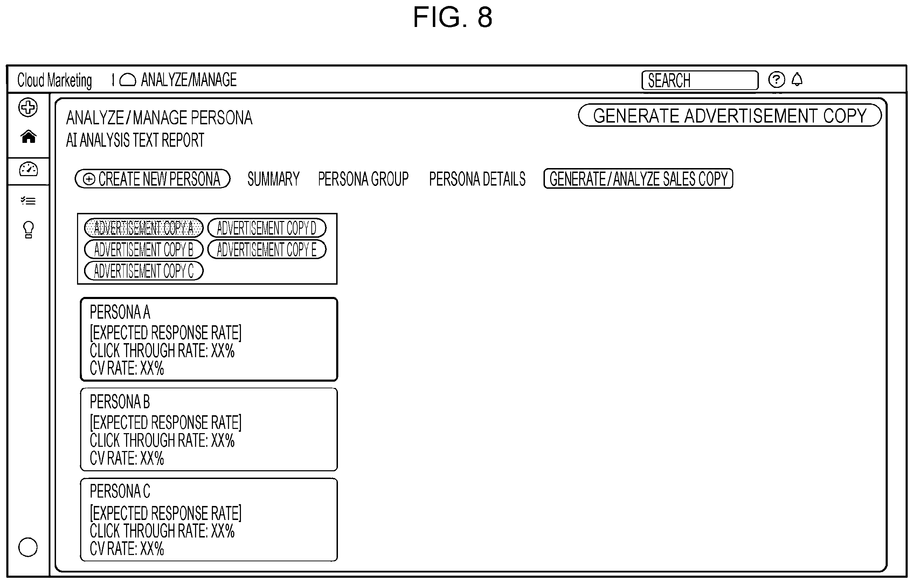

For example, as illustrated in Fig. 8, a screen for displaying advertising effectiveness of an advertisement copy A selected from among the plural generated advertisement copies for each persona is displayed on the user terminal 14.

An advertisement copy to be actually placed is decided by referring to the advertising effectiveness of each of the plural advertisement copies predicted for the plural personas on the user terminal 14.

Then, in the server 11, the collecting unit 55 collects, for each of actually placed advertisement copies, information concerning an advertised product, persona-related information, and advertising effectiveness of the advertisement copy, and causes these pieces of information to be stored in the advertisement record database 56.

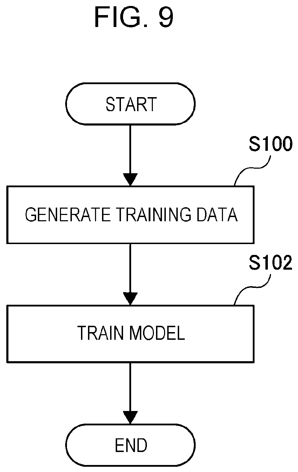

Then, in the server 11, the CPU 11A reads out a learning program from the ROM 14B or the storage 14D, loads the learning program into the RAM 14C, and executes the learning program, and thus learning processing illustrated in Fig. 9 is performed.

In step S100, the CPU 11A as the learning unit 57 generates, as training data, a pair of input information including a placed advertisement copy, information concerning an advertised product, and persona-related information, which are obtained from the advertisement record database 56, and advertising effectiveness of the advertisement copy.

In step S102, the CPU 11A as the learning unit 57 trains a neural network model for estimating, upon input of input information, advertising effectiveness of an advertisement copy corresponding to the input information on the basis of plural pieces of training data, stores the neural network model in the model storage unit 58, and ends the learning processing.

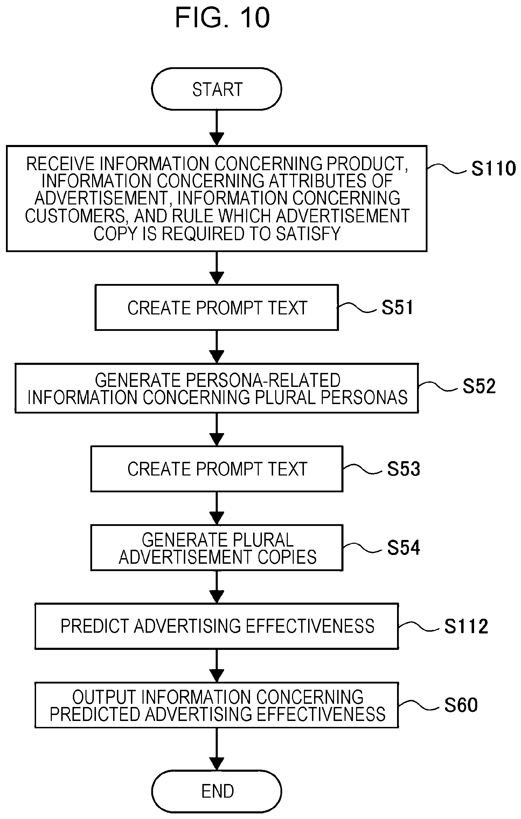

In a case where the trained neural network model is constructed by the learning unit 57, the CPU 11A reads out an estimation program from the ROM 14B or the storage 14D, loads the estimation program to the RAM 14C, and executes the estimation program, and thus estimation processing illustrated in Fig. 10 is performed in the server 11. Note that processes similar to those in the estimation processing illustrated in Fig. 5 are given identical reference signs, and detailed description thereof is omitted. It is assumed that information concerning a product for which an advertisement is to be generated, information concerning customers, information concerning attributes of the advertisement, and a rule which an advertisement copy to be generated is required to satisfy have been input on the user terminal 14.

In step S110, the CPU 11A as the receiving unit 50 receives the information concerning the product for which an advertisement is to be generated that is input from the user terminal 14. Furthermore, the CPU 11A as the receiving unit 50 receives the information concerning the customers that is input from the user terminal 14. The CPU 11A as the receiving unit 50 receives the information concerning attributes of the advertisement to be generated that is input from the user terminal 14. The CPU 11A as the receiving unit 50 receives the rule which an advertisement copy to be generated is required satisfy that is input from the user terminal 14.

In step S51, the CPU 11A as the first generation unit 51 creates a prompt text that prompts generation of persona-related information concerning plural personas on the basis of the received information concerning the customers and information concerning the attributes of the advertisement.

In step S52, the CPU 11A as the first generation unit 51 acquires persona-related information concerning the plural personas from output of the large language model 60 by inputting the created prompt text to the large language model 60.

In step S53, the CPU 11A as the second generation unit 52 creates a prompt text that prompts generation of plural advertisement copies on the basis of the received information concerning the product, information concerning attributes of the advertisement, and rule which an advertisement copy to be generated is required to satisfy.

In step S54, the CPU 11A as the second generation unit 52 acquires plural generated advertisement copies from output of the large language model 60 by inputting the created prompt text to the large language model 60.

In step S112, the CPU 11A as the estimation unit 59 repeatedly predicts, for each of combinations of the generated persona-related information concerning the plural personas and the plural generated advertisement copies, advertising effectiveness of the advertisement copy for the persona on the basis of the received information concerning the product, the persona-related information, and the advertisement copy by using the trained neural network model stored in the model storage unit 58.

In step S60, the CPU 11A as the output unit 54 transmits the advertising effectiveness of each of the plural generated advertisement copies predicted for the plural generated personas to the user terminal 14, and then ends the estimation processing.

Then, the server 11 performs the learning processing and updates the trained neural network model stored in the model storage unit 58 every time advertisement placement information including information concerning an advertised product, persona-related information corresponding to a customer, and information concerning reaction of the customer (e.g., whether or not an advertisement copy was clicked) is obtained in a predetermined amount for advertisement copies placed for customers.

By thus performing the processing, advertising effectiveness of each of the plural advertisement copies may be predicted for the plural personas.

### Modifications

Note that the present disclosure is not limited to the above exemplary embodiment and may be modified and applied without departing from the spirit of the present disclosure.

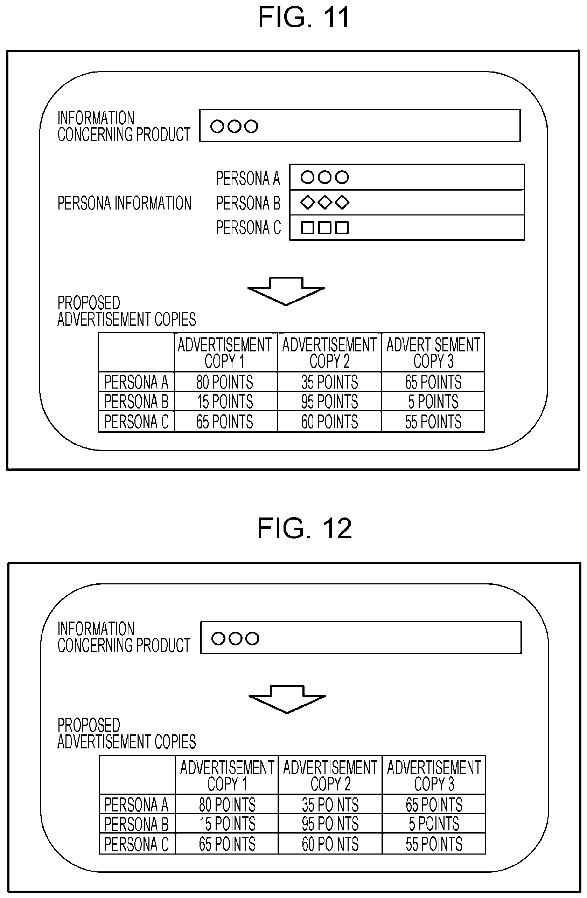

For example, as illustrated in Fig. 11, the output unit 54 may display, on the user terminal 14, a screen for displaying advertising effectiveness for each combination of an advertisement copy and a persona together with information concerning a product and persona-related information concerning plural personas.

Furthermore, by inputting information concerning a new product, persona-related information concerning plural new personas, and plural new advertisement copies to the trained neural network model, information concerning advertising effectiveness of each of the plural new advertisement copies predicted for the plural new personas may be output. Specifically, the trained neural network model may receive input of input information including a placed advertisement copy, information concerning an advertised product, and persona-related information concerning plural personas, and output advertising effectiveness of the advertisement copy for each of the plural personas corresponding to the input information.

Furthermore, a generation unit unifying the first generation unit 51, the second generation unit 52, and the third generation unit 53 may generate persona-related information concerning plural personas and plural advertisement copies by using the large language model 60 and generate information concerning advertising effectiveness of each of the plural generated advertisement copies predicted for the plural generated personas. In this case, the generation unit need just generate persona-related information concerning plural personas and plural advertisement copies on the basis of the received information concerning customers, information concerning attributes of the advertisement, rule which the advertisement copy to be generated is required to satisfy, and designation of an indicator of advertising effectiveness to be predicted, create a prompt text that prompts generation of information concerning advertising effectiveness of each of the plural generated advertisement copies predicted for the plural generated personas, and input the created prompt text to the large language model 60. As illustrated in Fig. 12, the output unit 54 may display, on the user terminal 14, a screen for displaying advertising effectiveness for each combination of an advertisement copy and a persona together with the information concerning the product.

By repeating generation of persona-related information concerning one persona by the first generation unit 51, generation of one advertisement copy by the second generation unit 52, and generation of advertising effectiveness predicted for a combination of the generated persona and advertisement copy by the third generation unit 53, advertising effectiveness of each of the plural advertisement copies may be predicted for the plural personas.

It is also possible to employ an arrangement in which plural advertisement copies generated by the second generation unit 52 are displayed on the user terminal 14, selection of at least one of the plural advertisement copies is received, and the third generation unit 53 generates, for each of the selected advertisement copies, information concerning advertising effectiveness predicted for the plural personas.

Although a case where the trained neural network model receives various kinds of information of the input information and predicts advertising effectiveness has been described as an example, advertising effectiveness may be predicted by receiving part of the various kinds of information of the input information instead of receiving all of the various kinds information of the input information.

Although a case where the server 11 trains the model and predicts advertising effectiveness has been described as an example, a learning apparatus that trains the model and an estimation apparatus that predicts advertising effectiveness may be separately provided.

In the embodiment above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiment above, the term "processor" is broad enough to encompass one processor or plural processors in collaboration which are located physically apart from each other but may work cooperatively. The order of operations of the processor is not limited to one described in the embodiment above, and may be changed.

Although an example in which the "system" in the present exemplary embodiment includes plural apparatuses has been described, the "system" may be constituted by a single apparatus having some of the functions of the plural apparatuses.

The processing performed by the server 11 according to the above exemplary embodiment may be processing performed by software, may be processing performed by hardware, or may be a combination of the processing performed by software and the processing performed by hardware. The processing performed by the server 11 may be stored as a program in a storage medium, and the storage medium may be distributed. The technique of the present disclosure may be applied to a program product.

The present disclosure is not limited to the above, and may be modified in various ways without departing from the spirit of the present disclosure.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix

(((1))) An information processing system including:
   a processor configured to:
   acquire information concerning a product to be advertised;
   generate information concerning advertising effectiveness of each of plural advertisement copies predicted for plural personas by using a language model on the basis of the information concerning the product; and
   display the advertising effectiveness of each of the plural advertisement copies predicted for the plural personas.
(((2))) The information processing system according to (((1))), in which:
   the processor is configured to further acquire persona-related information, and
   the plural personas used for the prediction of the advertising effectiveness are based on the persona-related information.
(((3))) The information processing system according to (((2))), in which:
   the persona-related information changes depending on an advertisement placement timing.
(((4))) The information processing system according to any one of (((1))) to (((3))), in which:
   the processor is configured to:
   further acquire an indicator of the advertising effectiveness to be predicted; and
   generate the information concerning the advertising effectiveness of each of the plural advertisement copies predicted for the plural personas by using the language model in accordance with the indicator of the advertising effectiveness to be predicted.
(((5))) The information processing system according to any one of (((1))) to (((4))), in which:
   the plural advertisement copies are generated by a learning model on the basis of the information concerning the product.
(((6))) The information processing system according to (((5))), in which:
   the processor is configured to:
   display the plural generated advertisement copies;
   receive selection of at least one of the plural advertisement copies; and
   generate information concerning advertising effectiveness of each of the selected at least one advertisement copy predicted for the plural personas.
(((7))) The information processing system according to any one of (((1))) to (((6))), in which:
   the processor is configured to further display the plural advertisement copies in an order depending on the predicted advertising effectiveness.
(((8))) The information processing system according to (((5))), in which:
   the processor is configured to further acquire a rule which an advertisement copy to be generated is required to satisfy, and
   the plural advertisement copies are generated by the learning model on the basis of the information concerning the product and the rule which the advertisement copy is required to satisfy.
(((9))) The information processing system according to (((5))), in which:
   the processor is configured to further acquire information concerning an attribute of the advertisement, and
   the plural advertisement copies are generated by the learning model on the basis of the information concerning the product and the information concerning the attribute of the advertisement.
(((10))) The information processing system according to (((9))), in which:
   the information concerning the attribute of the advertisement includes information concerning a purpose of the advertisement.
(((11))) The information processing system according to (((9))) or (((10))), in which:
   the information concerning the attribute of the advertisement includes information concerning an advertising medium.
(((12))) The information processing system according to any one of (((9))) to (((11))), in which:
   the information concerning the attribute of the advertisement includes information concerning an advertisement placement timing.
(((13))) An information processing system including:
   a processor configured to:
   execute a learning model plural times by inputting information on a new product, persona-related information concerning plural new personas, and plural new advertisement copies to output information concerning advertising effectiveness of each of the plural new advertisement copies predicted for the plural new personas, the learning model being pre-trained to output information concerning advertising effectiveness of an advertisement copy predicted for a persona upon input of information concerning a product to be advertised, persona-related information, and the advertisement copy; and
   display the advertising effectiveness of each of the plural new advertisement copies predicted for the plural new personas.
(((14))) An information processing system including:
   a processor configured to:
   cause a learning model to output information concerning advertising effectiveness of each of plural new advertisement copies predicted for plural new personas by inputting information on a new product, persona-related information concerning the plural new personas, and the plural new advertisement copies, the learning model being pre-trained to output information concerning advertising effectiveness of each of plural advertisement copies predicted for plural personas upon input of information concerning a product to be advertised, persona-related information concerning the plural personas, and the plural advertisement copies; and
   display the advertising effectiveness of each of the plural new advertisement copies predicted for the plural new personas.
(((15))) The information processing system according to (((13))) or (((14))), in which:
   the learning model is a model trained by associating advertisement placement information including a placed advertisement copy, information concerning a product advertised by using the advertisement copy, and persona-related information corresponding to a customer to whom the advertisement copy has been delivered, and advertising effectiveness based on action of the customer.
(((16))) The information processing system according to (((15))), in which:
   the learning model is regularly updated to the model trained by associating the advertisement placement information and the advertising effectiveness based on the action of the customer.
(((17))) The information processing system according to (((15))), in which:
   the learning model is updated to the model trained by associating the advertisement placement information and the advertising effectiveness based on the action of the customer every time the advertisement placement information is obtained in a predetermined amount.
(((18))) An information processing program causing a computer to execute a process including:
   acquiring information concerning a product to be advertised;
   generating information concerning advertising effectiveness of each of plural advertisement copies predicted for plural personas by using a language model on the basis of the information concerning the product; and
   displaying the advertising effectiveness of each of the plural advertisement copies predicted for the plural personas.
(((19))) An information processing program causing a computer to execute a process including:
   executing a learning model plural times by inputting information on a new product, persona-related information concerning plural new personas, and plural new advertisement copies to output information concerning advertising effectiveness of each of the plural new advertisement copies predicted for the plural new personas, the learning model being pre-trained to output information concerning advertising effectiveness of an advertisement copy predicted for a persona upon input of information concerning a product to be advertised, persona-related information, and the advertisement copy; and
   displaying the advertising effectiveness of each of the plural new advertisement copies predicted for the plural new personas.
(((20))) An information processing program causing a computer to execute a process including:
   causing a learning model to output information concerning advertising effectiveness of each of plural new advertisement copies predicted for plural new personas by inputting information on a new product, persona-related information concerning the plural new personas, and the plural new advertisement copies, the learning model being pre-trained to output information concerning advertising effectiveness of each of plural advertisement copies predicted for plural personas upon input of information concerning a product to be advertised, persona-related information concerning the plural personas, and the plural advertisement copies; and
   displaying the advertising effectiveness of each of the plural new advertisement copies predicted for the plural new personas.

According to (((1))), advertising effectiveness of each of the plural advertisement copies can be predicted for the plural personas.

According to (((2))), advertising effectiveness of each of the plural advertisement copies can be predicted for the plural personas based on the acquired persona-related information.

According to (((3))), advertising effectiveness of each of the plural advertisement copies can be predicted for the plural personas based on the persona-related information that changes depending on the advertisement placement timing.

According to (((4))), advertising effectiveness of each of the plural advertisement copies can be predicted for the plural personas in consideration of the indicator of the advertising effectiveness to be predicted.

According to (((5))), advertising effectiveness of each of the plural advertisement copies generated by the learning model on the basis of the information concerning the product can be predicted.

According to (((6))), advertising effectiveness of each of the selected advertisement copies can be predicted.

According to (((7))), the plural advertisement copies can be displayed in an order depending on the predicted advertising effectiveness.

According to (((8))), the plural advertisement copies can be generated in consideration of the rule which an advertisement copy is required to satisfy.

According to (((9))), the plural advertisement copies can be generated in consideration of the attribute of the advertisement.

According to (((10))), the plural advertisement copies can be generated in consideration of the purpose of the advertisement.

According to (((11))), the plural advertisement copies can be generated in consideration of the advertising medium.

According to (((12))), the plural advertisement copies can be generated in consideration of the advertisement placement timing.

According to (((13))), advertising effectiveness of each of the plural advertisement copies can be predicted for the plural personas.

According to (((14))), advertising effectiveness of each of the plural advertisement copies can be predicted for the plural personas.

According to (((15))), advertising effectiveness of each of the plural advertisement copies can be predicted for the plural personas by using the model trained by associating advertisement placement information and advertising effectiveness.

According to (((16))), advertising effectiveness of each of the plural advertisement copies can be predicted for the plural personas with high accuracy as compared with a case where the learning model is not regularly updated.

According to (((17))), advertising effectiveness of each of the plural advertisement copies can be predicted for the plural personas with high accuracy as compared with a case where the learning model is not updated every time the advertisement placement information is obtained in a predetermined amount.

According to (((18))), advertising effectiveness of each of the plural advertisement copies can be predicted for the plural personas.

According to (((19))), advertising effectiveness of each of the plural advertisement copies can be predicted for the plural personas.

According to (((20))), advertising effectiveness of each of the plural advertisement copies can be predicted for the plural personas.

## Claims

1. An information processing system comprising:
a processor configured to:
acquire information concerning a product to be advertised;
generate information concerning advertising effectiveness of each of a plurality of advertisement copies predicted for a plurality of personas by using a language model on a basis of the information concerning the product; and
display the advertising effectiveness of each of the plurality of advertisement copies predicted for the plurality of personas.

2. The information processing system according to claim 1, wherein:
the processor is configured to further acquire persona-related information, and
the plurality of personas used for the prediction of the advertising effectiveness are based on the persona-related information.

3. The information processing system according to claim 2, wherein:
the persona-related information changes depending on an advertisement placement timing.

4. The information processing system according to any one of claims 1 to 3, wherein:
the processor is configured to:
further acquire an indicator of the advertising effectiveness to be predicted; and
generate the information concerning the advertising effectiveness of each of the plurality of advertisement copies predicted for the plurality of personas by using the language model in accordance with the indicator of the advertising effectiveness to be predicted.

5. The information processing system according to any one of claims 1 to 4, wherein:
the plurality of advertisement copies are generated by a learning model on a basis of the information concerning the product.

6. The information processing system according to claim 5, wherein:
the processor is configured to:
display the plurality of generated advertisement copies;
receive selection of at least one of the plurality of advertisement copies; and
generate information concerning advertising effectiveness of each of the selected at least one advertisement copy predicted for the plurality of personas.

7. The information processing system according to any one of claims 1 to 6, wherein:
the processor is configured to further display the plurality of advertisement copies in an order depending on the predicted advertising effectiveness.

8. The information processing system according to claim 5, wherein:
the processor is configured to further acquire a rule which an advertisement copy to be generated is required to satisfy, and
the plurality of advertisement copies are generated by the learning model on a basis of the information concerning the product and the rule which the advertisement copy is required to satisfy.

9. The information processing system according to claim 5, wherein:
the processor is configured to further acquire information concerning an attribute of the advertisement, and
the plurality of advertisement copies are generated by the learning model on a basis of the information concerning the product and the information concerning the attribute of the advertisement.

10. The information processing system according to claim 9, wherein:
the information concerning the attribute of the advertisement includes at least one of information concerning a purpose of the advertisement, information concerning an advertising medium, or information concerning an advertisement placement timing.

11. An information processing system comprising:
a processor configured to:
execute a learning model plural times by inputting information on a new product, persona-related information concerning a plurality of new personas, and a plurality of new advertisement copies to output information concerning advertising effectiveness of each of the plurality of new advertisement copies predicted for the plurality of new personas, the learning model being pre-trained to output information concerning advertising effectiveness of an advertisement copy predicted for a persona upon input of information concerning a product to be advertised, persona-related information, and the advertisement copy; and
display the advertising effectiveness of each of the plurality of new advertisement copies predicted for the plurality of new personas.

12. An information processing system comprising:
a processor configured to:
cause a learning model to output information concerning advertising effectiveness of each of a plurality of new advertisement copies predicted for a plurality of new personas by inputting information on a new product, persona-related information concerning the plurality of new personas, and the plurality of new advertisement copies, the learning model being pre-trained to output information concerning advertising effectiveness of each of a plurality of advertisement copies predicted for a plurality of personas upon input of information concerning a product to be advertised, persona-related information concerning the plurality of personas, and the plurality of advertisement copies; and
display the advertising effectiveness of each of the plurality of new advertisement copies predicted for the plurality of new personas.

13. The information processing system according to claim 11 or 12, wherein:
the learning model is a model trained by associating advertisement placement information including a placed advertisement copy, information concerning a product advertised by using the advertisement copy, and persona-related information corresponding to a customer to whom the advertisement copy has been delivered, and advertising effectiveness based on action of the customer.

14. The information processing system according to claim 13, wherein:
the learning model is regularly updated to the model trained by associating the advertisement placement information and the advertising effectiveness based on the action of the customer.

15. The information processing system according to claim 13, wherein:
the learning model is updated to the model trained by associating the advertisement placement information and the advertising effectiveness based on the action of the customer every time the advertisement placement information is obtained in a predetermined amount.

16. An information processing program causing a computer to execute a process, the process comprising:
acquiring information concerning a product to be advertised;
generating information concerning advertising effectiveness of each of a plurality of advertisement copies predicted for a plurality of personas by using a language model on a basis of the information concerning the product; and
displaying the advertising effectiveness of each of the plurality of advertisement copies predicted for the plurality of personas.

17. An information processing program causing a computer to execute a process, the process comprising:
executing a learning model plural times by inputting information on a new product, persona-related information concerning a plurality of new personas, and a plurality of new advertisement copies to output information concerning advertising effectiveness of each of the plurality of new advertisement copies predicted for the plurality of new personas, the learning model being pre-trained to output information concerning advertising effectiveness of an advertisement copy predicted for a persona upon input of information concerning a product to be advertised, persona-related information, and the advertisement copy; and
displaying the advertising effectiveness of each of the plurality of new advertisement copies predicted for the plurality of new personas.

18. An information processing program causing a computer to execute a process, the process comprising:
causing a learning model to output information concerning advertising effectiveness of each of a plurality of new advertisement copies predicted for a plurality of new personas by inputting information on a new product, persona-related information concerning the plurality of new personas, and the plurality of new advertisement copies, the learning model being pre-trained to output information concerning advertising effectiveness of each of a plurality of advertisement copies predicted for a plurality of personas upon input of information concerning a product to be advertised, persona-related information concerning the plurality of personas, and the plurality of advertisement copies; and
displaying the advertising effectiveness of each of the plurality of new advertisement copies predicted for the plurality of new personas.
